(19) **Europäisches Patentamt**
**European Patent Office**
**Office européen des brevets**

(11) **EP 1 668 621 B1**

(12) **EUROPEAN PATENT SPECIFICATION**

(45) Date of publication and mention
of the grant of the patent:
**17.08.2011 Bulletin 2011/33**

(51) Int Cl.:
***G09F 21/00*** (2006.01)     ***G09F 19/02*** (2006.01)
***G09G 3/20*** (2006.01)

(21) Application number: **03817229.2**

(86) International application number:
**PCT/CA2003/000874**

(22) Date of filing: **16.06.2003**

(87) International publication number:
**WO 2004/111980 (23.12.2004 Gazette 2004/52)**

(54) **MOVEABLE IMAGE DISPLAY SYSTEM**

BEWEGLICHE ANZEIGEVORRICHTUNG

SYSTEME D'AFFICHAGE D'IMAGES MOBILE

(84) Designated Contracting States:
**AT BE BG CH CY CZ DE DK EE ES FI FR GB GR
HU IE IT LI LU MC NL PT RO SE SI SK TR**

(43) Date of publication of application:
**14.06.2006 Bulletin 2006/24**

(73) Proprietor: **Hine, Laurence J.
Chilliwack,
British Columbia V2R 4A3 (CA)**

(72) Inventors:
• **HINE, Laurence, J.
Chilliwack, British Columbia V2R 4A3 (CA)**
• **LI, Hui
Vancouver, Wa 986685 (US)**

(74) Representative: **Fiener, Josef
Patentanw. J. Fiener et col.
P.O. Box 12 49
87712 Mindelheim (DE)**

(56) References cited:
**WO-A-02/20390     CA-A- 2 365 142
US-A- 5 687 499**

• **PATENT ABSTRACTS OF JAPAN vol. 1997, no.
04, 30 April 1997 (1997-04-30) & JP 08 328510 A
(YAMASHITA DENKI KK), 13 December 1996
(1996-12-13)**

## Description

## FIELD OF THE INVENTION

The present invention relates to a device for displaying images on moving surfaces.

## BACKGROUND

There is an ever-increasing demand for new means for conveying visual information. In particular, the advertising industry continuously seeks to make use of more and more communicative media to convey visual information. Advertisers use not only traditional communicative media such as newspapers, magazines, billboards and television, but also the internet, the sides of buses and taxis, disposable cups, beverages, t-shirts, walls and floor space. Virtually any surface that can be effectively used to present information in a visual form is used to advertise.

US 5,687,499 discloses a moveable image display apparatus according to the precharacterizing portion of claim 1 wherein electrical power lines or self-powered panels with heavy batteries installed in the interior of the panel for transmitting the power to the display apparatus are used.

WO 02/20390 A2 discloses a power transmitter for illuminating a handrail of an escalator where the power source is not electrically connected to the illumination display. Image display and data transmission are made through a microcontroller electrically connected by wires with the power source and the light sources.

Provided a suitable medium, such as that provided by the present invention, many moving surfaces can be utilized to convey non-advertising information such as news, tourist information and directions.

Accordingly, it is an object of the present invention to provide an apparatus for displaying images and other visual information on moving surfaces, such as those on escalators, moving sidewalks, rotating signs, billboards, baggage carousels and the like.

## SUMMARY OF THE INVENTION

An apparatus for displaying images is provided that comprises at least a power transmitter, a data transmitter and a moveable display frame that is not electrically connected to the data or power transmitters. The moveable display frame is capable of displaying images and can be moved independently of the power and data transmitters.

In a preferred embodiment, the invention includes a power transmitter, a data transmitter and a plurality of moveable display frames. Each of the moveable display frames can be moved independently of the power and data transmitters and relative to the other moveable display frames. The moveable display frames are electrically linked to one another such that power and data from one moveable display frame can be sent to the other moveable display frames.

In an alternate embodiment the moveable display frames form the plates of a baggage carousel. The invention therefore provides a means for displaying images on the plates of baggage carousels.

A power transmitter consists of one or more time variable magnetic flux generators (TVMFG). The TVMFGs are placed in fixed positions proximate to the moveable display frames. In a preferred embodiment, the time variable magnetic flux generated by the power transmitter is created by induction by an AC current. Alternatively, the time variable magnetic flux may be generated by a moving permanent magnet.

The moveable display frames each include a power generator coil in which a current is induced by the time variable magnetic flux generated by the TVMFGs of the power transmitters. As the moveable display frames move relative to the power transmitters, at least one of the moveable display frames will be sufficiently proximate to a power transmitter to receive power any given point in time. The moveable display frames are connected to each other by electric cables such that those moveable display frames that are not sufficiently proximate to the TVMFGs to directly receive power therefrom, receive power from the moveable display frames that are sufficiently proximate to the TVMFGs to receive power.

The spacing between TVMFGs and between power generator coils of adjacent moveable display frames must be such that at all times at least one power generator coil is sufficiently close to a TVMFG to receive power. The power received by the power generator coil is shared with the other moveable display frames via the electric cables linking the moveable display frames.

At least one data transmitter is fixed in a position sufficiently proximate to the moveable display frames to transmit data to the moveable display frames. In a preferred embodiment, the data transmitters transmit data via infrared light emitting diodes controlled by a microcontroller. However, data transmission may be achieved by other suitable means, such as ultrasonic or wireless transmission.

The moveable display frames each include a data receiver for receiving data transmitted by the data transmitter. In a preferred embodiment, the data receiver takes the form of an infrared light emitting diode and receiver circuit. However, the data receiver may take any form appropriate to the modality of the data transmitter.

As the moveable display frames move relative to the data transmitters at least one of the moveable display frames will be receiving data from the data transmitters at any given point in time. The moveable display frames are connected to each other by electric cables such that those moveable display frames that are not sufficiently proximate to the data transmitters to receive data therefrom, receive data from the moveable display frames that are sufficiently proximate to the data transmitters to receive data.

The spacing between data transmitters and between data receivers of adjacent moveable display frames must be such that at all times at least one data receiver is sufficiently close to a data transmitter to receive data therefrom. The data received by that data receiver is then shared with the other moveable display frames via electric cables linking the moveable display frames.

Each moveable display frame includes a data receiver, display controller and display panel, all of which are powered by the current supplied to the moveable display frames by the TVMFGs. In a preferred embodiment the display panels include a plurality of arrays of LED's. However, the display panels could alternatively include LCD, plasma displays, or any other suitable method of displaying images. The display panels may additionally include data buffers to store incoming digital display data, and digital to analog converters to convert the incoming digital display data to analog voltage signals to control the brightness of the LED's. The display controller identifies data intended for that moveable display frame and distributes the data to the display panel of that display frame.

Alternative embodiments of the present invention could be used for displaying images on the steps of escalators, on moving sidewalks, or on moving signs or billboards.

## BRIEF DESCRIPTION OF THE DRAWINGS

Further features and advantages will be apparent from the following detailed description, given by way of example, of a preferred embodiment taken in conjunction with the accompanying drawings, wherein:

**Figure 1A** is a top view of a plurality of moveable display frames, infrared data transmitters and time variable magnetic flux generators;

**Figure 1B** is a side view of a plurality of moveable display frames, infrared data transmitters and time variable magnetic flux generators;

**Figure 2** is a side view of a time variable magnetic flux generator using AC power generator coils;

**Figure 3** shows side and top views of the AC power generator coils;

**Figure 4** is a side view of a time variable magnetic flux generator using a magnet wheel;

**Figure 5** shows an AC to DC rectifier circuit and power link cable;

**Figure 6** shows an infrared data transmitter and a data receiver circuit;

**Figure 7** is a top view of a display panel and controller; and

**Figure 8** shows a display pixel and data path.

## DETAILED DESCRIPTION WITH REFERENCE TO THE DRAWINGS

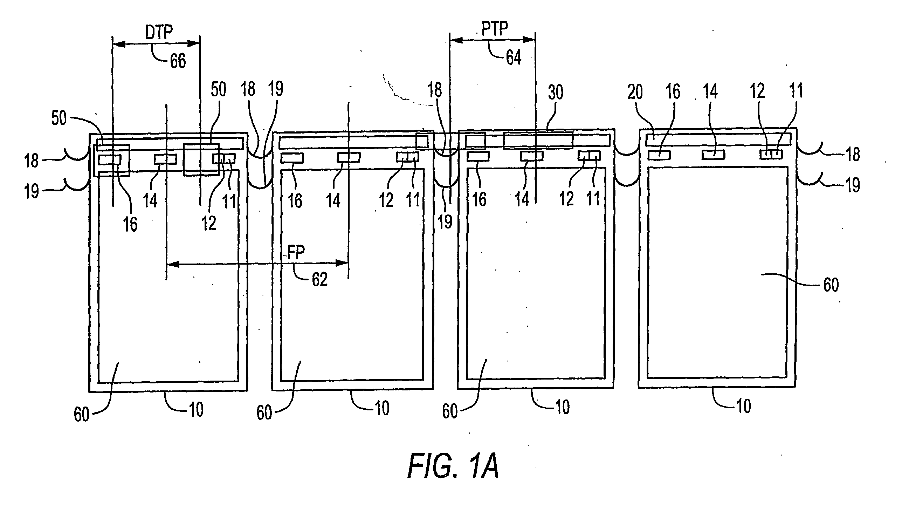

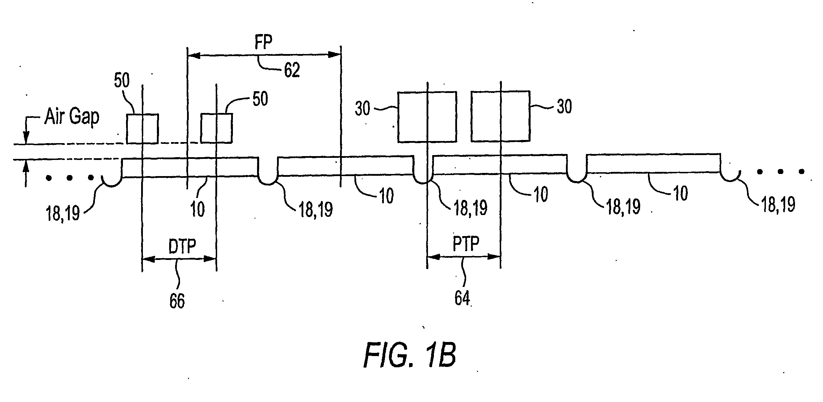

Referring to **Figures 1A** and **1B,** four moveable display frames **10** are shown. Adjacent ones of moveable display frames **10** are connected by data cables **18** and power cables **19.** Time variable magnetic flux generators (TVMFG) **30** and infrared data transmitters **50** are shown mounted above moveable display frames **10.** The TVMFGs **30** provide power to the moveable display frames **10** but are not physically connected to the moveable display frames **10.** Similarly, the infrared data transmitters **50** provide data to the moveable display frames **10** but are not physically connected to the moveable display frames **10.** Although there is no contact, the closer the TVMFGs **30** and infrared data transmitters **50** are to the moveable display frames **10** the more efficient the power and data transfer. The TVMFGs **30** and infrared data transmitters **50** are fixed in position and do not move with the moveable display frames **10.**

In a preferred embodiment, the moveable display frames **10** form the plates of a baggage carousel such as would be used in an airport. Accordingly, in addition to the data cables **18** and power cables **19,** the moveable display frames **10** are physically connected to each other by means (not shown), appropriate to their function as plates of a baggage carousel. The moveable display frames may form the entire plate or be incorporated into a plate of a baggage carousel.

Referring to **Figure 1A,** each one of the moveable display frames **10** includes a display panel **60,** AC power generator coil **20,** an infrared data receiver **16,** a display controller **14,** an AC to DC rectifier **11** and DC to DC converter **12.** Frame pitch (FP) **62** is the center-to-center distance between moveable display frames **10.** The center-to-center distance between TVMFGs **30** is the power transmitter pitch (PTP) **64.** The center-to-center distance between adjacent infrared data transmitters **50** is the data transmitter pitch (DTP) **66.**

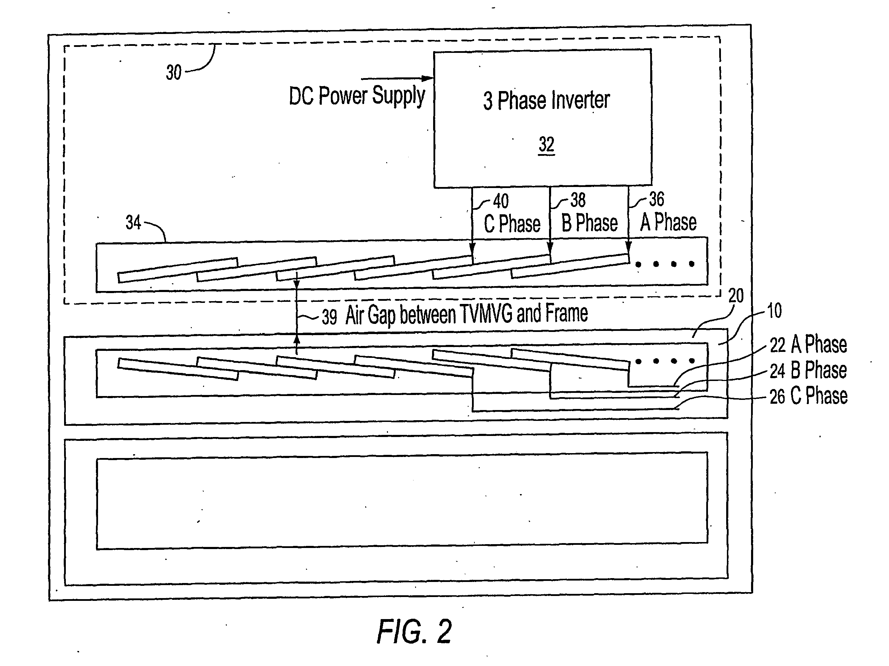

Referring to **Figure 2,** a TVMFG **30** is shown. TVMFG **30** includes a three-phase inverter **32** and a TVMFG coil **34** having an A phase wire **36,** B phase wire **38** and C phase wire **40.** The TVMFG coil **34** is separated by an air gap **39** from the AC power generator coil **20** on the moveable display frame **10.** AC power generator coil **20** on moveable display frame **10** has a similar structure to that of the TVMFG coil **34.** AC power generator coil **20** includes three wires: A phase wire **22,** B phase wire **24** and C phase wire **26.** In a preferred embodiment, the phase wires **22, 24, 26** making up AC power generator coil **20** are embedded in the moveable display frame **10.**

The three-phase inverter **32** provides three phases of 120 degree shifted AC current to TVMFG coil **34** and thereby generates a time variable magnetic flux that induces an AC current in AC power generator coil **20** of display frame **10.**

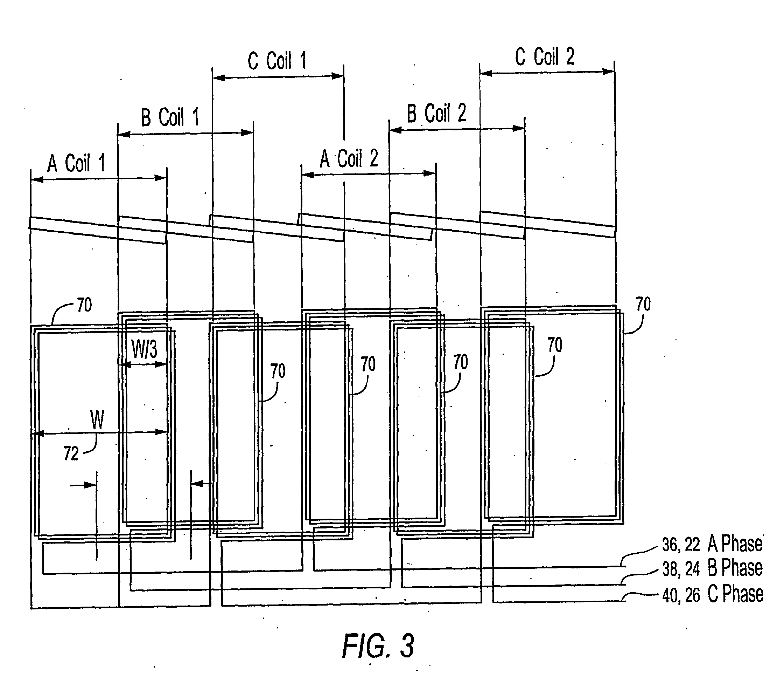

Referring to **Figures 1A, 1B, 2** and **3,** the layout of the TVMFG coil **34** and AC power generator coil **20** is shown. Each of the A phase wire **36,** B phase wire **38** and C phase wire **40** of the TVMFG coil **34,** and the A phase wire **22,** B phase wire **24** and C phase wire **26** of the AC power generator coil **20** is formed into a plurality of rectangular coils **70.** In a preferred embodiment, the rectangular coils **70** are of equal width **72** and the overlap of adjacent rectangular coils **70** is equal to 1/3 of the width **72.** Therefore, the center-to-center distance between adjacent rectangular coils **70** is equal to 2/3 of the width **72.**

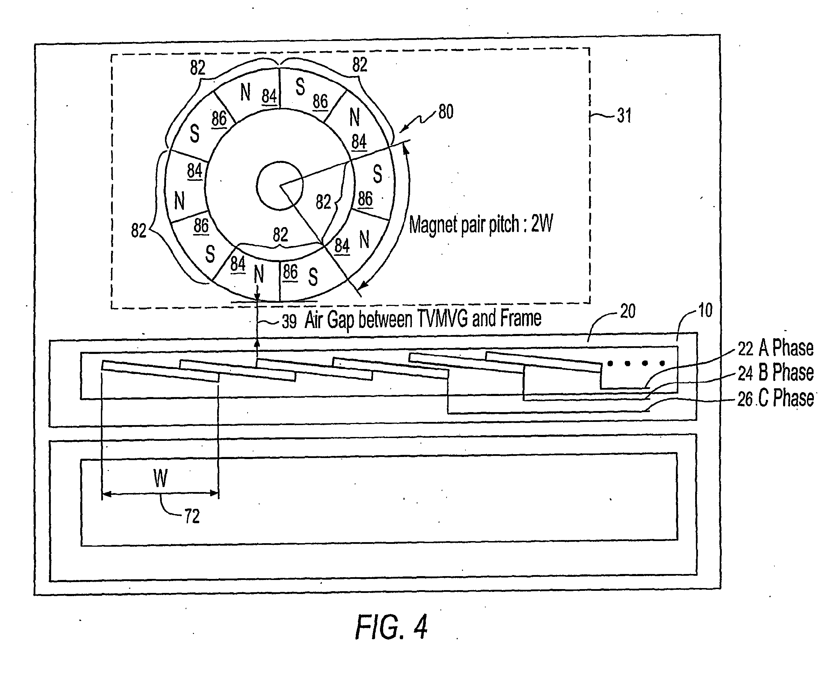

Referring to **Figure 4,** an alternative embodiment **31** of a TVMFG **30** is shown that includes a magnet wheel **80** having a plurality of pairs of magnets **82.** Each pair of magnets **82** comprises a north pole **84** and a south pole **86.** The pitch of one pair of magnets along the perimeter of the magnet wheel **80** is twice the width **72** of the rectangular coils **70** of AC power generator coil **20.** The magnet wheel **80** is driven by a motor (not shown) and is separated from the moveable display frames **10** and AC power generator coils **20** by air gap **39.** The motion of the magnet wheel **80,** creates a time variable magnetic flux which induces a current in AC power generator coil **20.** This produces a 120 degree three phase voltage output from the AC power generator coil **20.**

Referring to **Figures 1, 3** and **4,** in order to make sure that a TVMFG **30** is always sufficiently proximate to the AC power generator coils **20** of moveable display frames **10,** the PTP **64** should be:

$$PTP = i*FP + FP/n$$

Where n is the number of TVMFGs **30,** and i is an integer value representative of the size of the TVMFG **30** relative to FP **62.** For example, if the TVMFG **30** are of negligible size, i = 0 so that PTP = FP/n. However, if the TVMFGs **30** are of a size less than FP **62** but such that more than one TVMFG **30** cannot fit within FP **62,** i = 1 so that PTP = FP + FP/n. If the TVMFG **30** are larger than FP **62** but smaller than 2 FP **62,** i = 2 so that PTP = 2FP + FP/n.

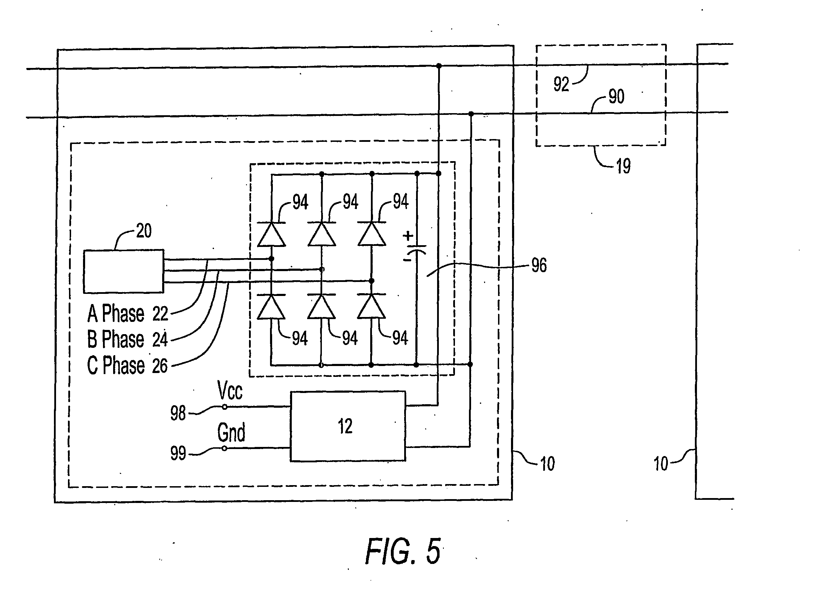

Referring to **Figure 5,** adjacent moveable display frames **10** are connected by power cable **19.** Power cable **19** consists of ground cable **90** and DC current cable **92.** AC to DC rectifier **11** consists of six rectifier diodes **94** and one capacitor **96.** The input of AC to DC rectifier **11** is connected to three phase wires **22, 24, 26** of AC power generator coil **20.** The DC output of AC to DC rectifier **11** is connected to DC current cable **92.** DC-to-DC converter **12** is connected in parallel to ground wire **90** and DC current cable **92.** The outputs of DC-to-DC converter **12** are connected to VCC **98** and ground **99.**

When the AC power generator coil **20** of moveable display frame **10** is exposed to the time variable magnetic flux generated by TVMFG **30,** current flows from AC power generator coil **20** to the DC to DC converter **12** and the DC current cable **92.** If moveable display frame **10** is not close enough to TVMFG **30** to receive power therefrom, display panel **60,** display controller **14,** infrared data receiver **16** and DC to DC converter **12** of moveable display frame **10** receive DC current from other moveable display frames **10** via DC current cable **92.** The DC-to-DC converter **12** changes the DC voltage received from the AC to DC rectifier **11** or DC current cable **92** to a stable voltage suitable for powering display controller **14,** infrared data receiver **16** and display panel **60.**

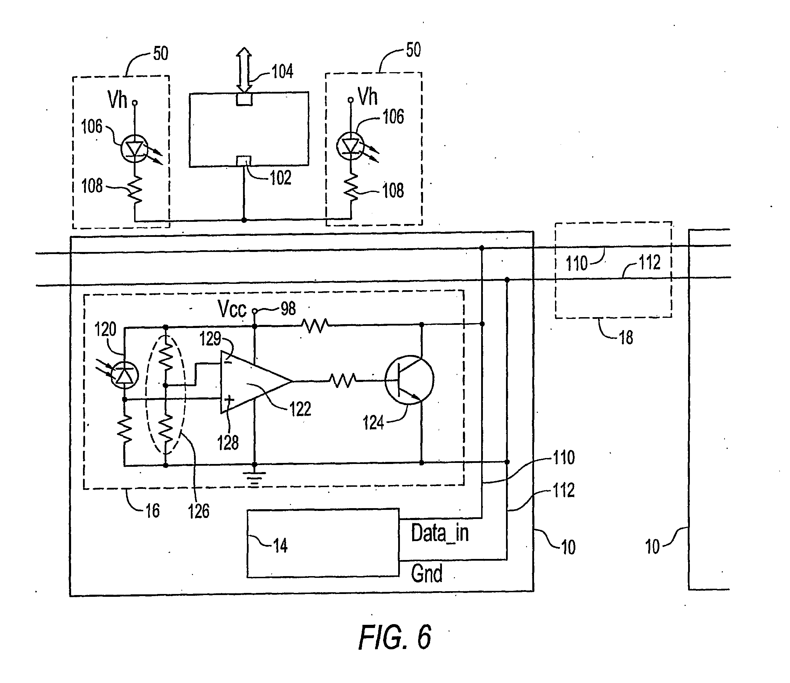

Referring to **Figure 6;** infrared data transmitters **50** are connected to microcontroller , via serial port **102.** Microcontroller receives display data from a computer, then internet, or other source (not shown), through serial port **104.** Infrared data transmitters **50** include transmitting infrared diodes **106** and resistors **108.**

Adjacent moveable display frames **10** are connected by data cable **18** consisting of data line **110** and ground **112.** Infrared data receiver **16** is connected, in parallel with display controller **14,** to data line **110** and ground **112.** Infrared data receiver **16** comprises, in part, receiving infrared diode **120,** comparator **122,** transistor **124** and voltage divider **126.** Voltage divider **126** consists of resistors **138** and **140.**

Data received by one of the infrared data receivers **16** of one of the moveable display frames **10** is distributed to the other moveable display frames **10** via data line **110.**

Referring to **Figures 1** and **6,** in a preferred embodiment the DTP **66** is:

$$DTP = i*FP + FP/n$$

Where i is an integer representative of the size of the infrared data transmitter **50** relative to FP **60,** and where n is the number of infrared data transmitters **50.** For example, if the infrared data transmitters **50** are of negligible size, i = 0 so that DTP = FP/n. However, if the infrared data transmitters **50** are of a size such that more than one cannot fit within FP **62,** i = 1 so that DTP = FP + FP/n. If the infrared data transmitters **50** are larger than FP **62** but smaller than 2 FP **62,** i = 2.

Resistors **108** are used to limit the current to the transmitting infrared diodes **106.** The DC power supply for the microcontroller and infrared data transmitters **50** is Vh **114** which is completely independent of the power supplied to the display frames **10** via TVMFGs **30.** If the voltage of serial port **102** of microcontroller is high, the transmitting infrared diodes **106** will be off so that no infrared light is emitted. If the voltage of serial port **102** of microcontroller is low, then the transmitting infrared diodes **106** will be on so that infrared light will be emitted.

Infrared light emitted by transmitting infrared diodes **106** is received by receiving infrared diode **120.** If the transmitting infrared diodes **106** are off then the resistance of the receiving infrared diode **120** is high and the voltage to pin + **128** of the comparator **122** is lower than the voltage provided by the voltage divider **126,** so that the output of the comparator **122** is low, the output of the transistor **124** is high and the output signal of the infrared data receiver **16** is high. If the transmitting infrared diodes **106** are on, the resistance of the receiving infrared diode **120** is low, the voltage to the pin + **128** of the comparator **122** is higher than the voltage provided by the voltage divider **126,** so that the output of the comparator **122** is high, the output of the transistor **124** is low and the output of the infrared data receiver **16** is low. The output of the infrared data receiver **16** reflects the state of the serial port **102** of the microcontroller **100.** The data received by infrared data receiver **16** of one moveable display frame **10** is transmitted to other moveable display frames **10** via data line **110.**

The data received by infrared data receivers **16** is also sent to display controller **14.**

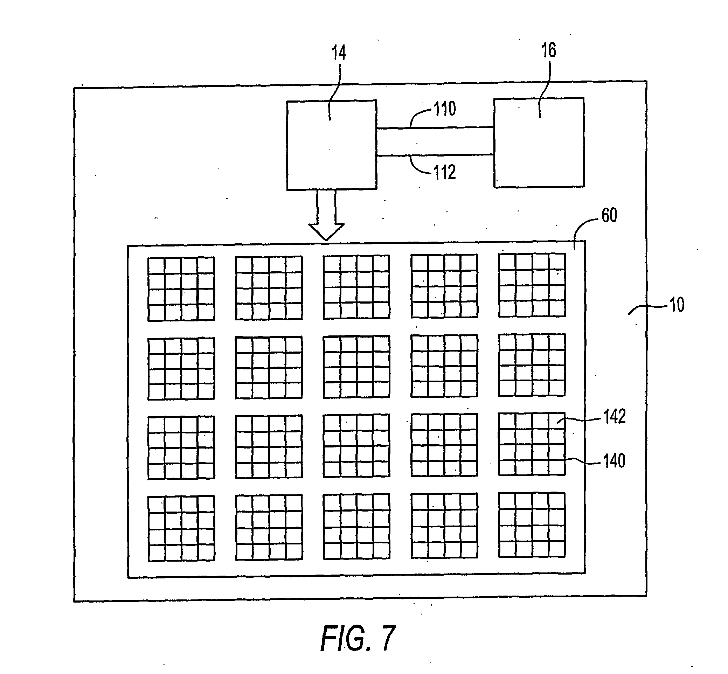

Referring to **Figure 7,** a moveable display frame **10** is shown comprising a display panel **60,** display controller **14** and infrared data receiver **16.** In a preferred embodiment the display panel **60** includes an array of LED's. Alternatively, the display panel 60 may have an LCD or Plasma display. The LED's comprising the display panel **60** are arranged in a plurality of display matrices **140.** The display matrices **140** have a plurality of rows and columns of pixels **142.** Each pixel **142** comprises a red, green and blue LED. Each display matrix **140** is an independent unit having its own data and power connections (not shown) such that if there is a problem with an individual display matrix **140** it may be removed from the display panel **60** and replaced with a new one.

The display controller **14** receives the display data from the infrared data receiver **16** and directs the appropriate portions of the data to individual display matrices **140.**

Referring to **Figures 5, 6** and **7,** VCC **98** carries DC current from DC to DC converter **12** to display controller **14,** infrared data receiver **16,** and display panel **60.**

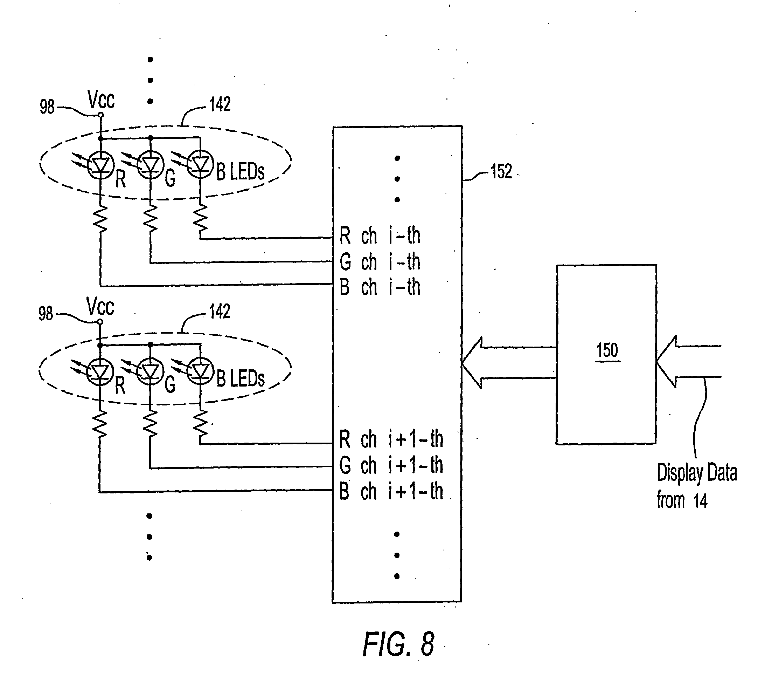

Referring to **Figures 7 and 8,** an integrated circuit data buffer **150** receives digital display data from display controller **14.** Data buffer **150** then sends the digital display data to digital-to-analog converter **152** where it is converted to continuous analog voltage signals used to control the brightness of the red, green and blue LED's of the pixels **142** making up the display panel **60.** Since the digital-to-analog converter **152** has to have three times as many analog output channels as the total number of pixels, depending on the number of pixels **142** making up the display panel **60,** a plurality of digital-to-analog converters **152** may be required. The digital-to-analog converters 152 may be connected to the data buffer **150** in series or in parallel.

While this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is therefore contemplated that the appended claims will cover any such modifications or embodiments as fall within the scope of the invention.

## Claims

1. A moveable display apparatus comprising:

    a) at least one power transmitter (30);
    b) at least one data transmitter (50); and
    c) at least one moveable display frame (10) capable of displaying an image, receiving power from said power transmitter (30) and receiving data from said data transmitter (50);

    **characterized in that**
    said moveable display frame (10) is moveable relative to said power transmitter (30) and said data transmitter (50), and further
    said data transmitter (50) and said power transmitter (30) are not electrically connected to said moveable display frame (10).

2. The apparatus of claim 1, wherein said moveable display system comprises a plurality of moveable display frames (10).

3. The apparatus of claim 2, wherein said plurality of moveable display frames (10) are connected to one another.

4. The apparatus of claim 3, wherein said moveable display frames (10) are capable of movement relative to said power transmitter (30) and said data transmitter (50) and wherein each of said moveable display frames (10) is capable of movement relative to each of the other ones of said moveable display frames (10),

5. The apparatus of claim 2, wherein said moveable display frames (10) are linked by electrical cable (19) capable of carrying electrical current.

6. The apparatus of claim 5, wherein said electrical cables (19) comprise a DC wire (92) and a ground wire (90).

7. The apparatus of claim 2, wherein said moveable display frames (10) are linked by data cable (18) capable of carrying data.

8. The apparatus of claim 7, wherein said data cable (18) comprises a data wire (110) and a ground wire (112).

9. The apparatus of claim 5, wherein power received by one of said moveable display frames (10) from said power transmitter (30) is transmitted to other ones of said moveable display frames (10) by said electrical wires.

10. The apparatus of claim 7, wherein data received by one of said moveable display frames (10) from said data transmitter (50) is transmitted to other ones of said moveable display frames (10) by said data cable (18).

11. The apparatus of claim 2, wherein each of said moveable display frames (10) comprises:

   a) a display panel (60) for displaying images;
   b) a data receiver (16) for receiving data from said data transmitter (50);
   c) a display controller (14) for identifying data destined for said display panel (60), processing said data and distributing said data to said display panel (60): and
   d) a power receiver for receiving power from said power transmitter (30).

12. The apparatus of claim 11 wherein said display panel (60) comprises a plurality of light emitting diodes (108).

13. The apparatus of claim 11, wherein said data receiver (16) comprises an infrared light emitting diode (106), wherein the electrical resistance of said light emitting diode (106) is lowered in response to Infrared light emitted by said data transmitter (50).

14. The apparatus of claim 11, wherein said display controller (14) comprises a microcontroller.

15. The apparatus of claim 11, wherein said power receiver comprises a plurality of wire coils, an AC to DC rectifier (19) and a DC to DC converter (12), wherein a current is induced in said plurality of wire coils by a time variable magnetic flux generated by said power transmitter (30).

16. The apparatus of claim 1, wherein said power transmitter (30) comprises a time variable magnetic flux generator.

17. The apparatus of claim 16, wherein said time variable magnetic flux generator (30) comprises a phase inverter (32) connected to a plurality of wire coils, wherein, when phase shifted AC current is applied to said plurality of wire coils, a time variable magnetic flux is generated.

18. The apparatus of claim 1, wherein said data transmitter (50) comprises a microcontroller comprising at least one serial port (102), said serial port (102) being connected to an infrared light emitting diode (106).

19. The apparatus of claim 18, wherein when a voltage of said serial port (102) is high, said infrared light emitting diode (106) is off, and when a voltage of said serial port (102) is low, said infrared light emitting diode (108) is on.

20. The apparatus of claim 1, wherein said display frame (10) is in the form of a plate of a baggage carousel.

21. The apparatus of claim 1, wherein said display frame (10) forms part of a step of an escalator.

**Patentansprüche**

1. Bewegliche Anzeigevorrichtung, umfassend:

   a) mindestens einen Leistungssender (30);
   b) mindestens einen Daten-Sender (50); und
   c) mindestens einen beweglichen Anzeigerahmen (10) zum Anzeigen eines Bilds,

   Empfangen der Leistung von dem Leistungssender (30) und Empfangen von Daten von dem Daten-Sender (50); **dadurch gekennzeichnet, dass** der bewegliche Anzeigerahmen (10) relativ zu dem Leistungssender (30) und dem Daten-Sender (50) beweglich ist und weiterhin der Daten-Sender (50) und der Leistungssender (30) nicht elektrisch an den beweglichen Anzeigerahmen (10) angeschlossen sind.

2. Vorrichtung nach Anspruch 1, wobei die bewegliche Anzeigevorrichtung eine Mehrzahl der beweglichen Anzeigerahmen (10) umfasst.

3. Vorrichtung nach Anspruch 2, wobei die Mehrzahl der beweglichen Anzeigerahmen (10) aneinander angeschlossen sind.

4. Vorrichtung nach Anspruch 3, wobei die beweglichen Anzeigerahmen (10) relativ zum Leistungssender (30) und zum Daten-Sender (50) beweglich sind und wobei jeder der beweglichen Anzeigerahmen (10) zur Bewegung relativ zu jedem von den sonstigen der beweglichen Anzeigerahmen (10) fähig ist.

5. Vorrichtung nach Anspruch 2, wobei die beweglichen Anzeigerahmen (10) durch das elektrische Kabel (19) verbunden werden, das zum Leiten elektrischen Stroms fähig ist.

**6.** Vorrichtung nach Anspruch 5, wobei die elektrischen Kabel (19) ein Gleichstrom-Kabel (92) und ein Erdungskabel (90) umfassen.

**7.** Vorrichtung nach Anspruch 2, wobei die beweglichen Anzeigerahmen (10) durch das Datenkabel (18) verbunden werden, das zum Leiten von Daten fähig ist.

**8.** Vorrichtung nach Anspruch 7, wobei das Datenkabel (18) einen Daten-Draht (110) und einen Erdungsdraht (112) umfasst.

**9.** Vorrichtung nach Anspruch 5, wobei die Leistung, die durch einen von den beweglichen Anzeigerahmen (10) vom Leistungssender (30) empfangen wird, zu den sonstigen von den beweglichen Anzeigerahmen (10) durch die elektrischen Kabel übertragen wird.

**10.** Vorrichtung nach Anspruch 7, wobei die Daten, die durch einen von den beweglichen Anzeigerahmen (10) von dem Daten-Sender (50) empfangen werden, zu den sonstigen von den beweglichen Anzeigerahmen (10) durch das Datenkabel (18) übertragen werden.

**11.** Vorrichtung nach Anspruch 2, wobei jeder der beweglichen Anzeigerahmen (10) umfasst;

a) eine Anzeigetafel (60) zum Anzeigen von Bildern;
b) einen Daten-Empfänger (16) für den Empfang von Daten von dem Daten-Sender (50);
c) eine Anzeigesteuerung (14) für das Identifizieren der für die Anzeigetafel (60) bestimmten Daten, das Verarbeiten der Daten und das Verteilen der Daten zu der Anzeigetafel (60); und
d) einen Leistungsempfänger für den Empfang der Leistung vom Leistungssender (30).

**12.** Vorrichtung nach Anspruch 11, wobei die Anzeigetafel (60) mehrere Leuchtdioden (106) umfasst.

**13.** Vorrichtung nach Anspruch 11, wobei der Daten-Empfänger (16) eine infrarot-Leuchtdiode (106) umfasst und der elektrische Widerstand der Leuchtdiode (106) Erwiderung auf Infrarotlicht reduziert ist, das vom Daten-Sender (50) ausgestrahlt wird.

**14.** Vorrichtung nach Anspruch 11, wobei die Anzeigesteuerung (14) einen Mikrocontroller umfasst,

**15.** Vorrichtung nach Anspruch 11, wobei der Leistungsempfänger eine Mehrzahl von Drahtspulen, einen Wechselstrom-zu-Gleichstrom-Gleichrichter (11) und einen Gleichstromzu-Gleichstrom-Konverter (12) umfasst, wobei ein Strom in mehreren Drahtspulen durch einen zeitvariablen Fluss induziert wird, der von dem Leistungssender (30) erzeugt wird.

**16.** Vorrichtung nach Anspruch 1, wobei der Leistungssender (30) einen zeitvariablen Magnetflussgenerator umfasst.

**17.** Vorrichtung nach Anspruch 16, wobei der zeitvariable Magnetflussgenerator (30) einen Phasen-Inverter (32) umfasst, der an mehrere Drahtspulen angeschlossen ist, wobei ein zeitvariabler Magnetfluss erzeugt wird, wenn phasenverschobener Wechselstrom an die Mehrzahl der Drahtspulen angelegt wird.

**18.** Vorrichtung nach Anspruch 1, wobei der Daten-Sender (50) einen Mikrocontroller enthält, der mindestens eine serielle Schnittstelle (102) aufweist, wobei die serielle Schnittstelle an eine lichtemittierende Infrarotdiode (106) angeschlossen ist,

**19.** Vorrichtung nach Anspruch 18, wobei bei hoher Spannung der seriellen Schnittstelle (102) die lichtemittierende Infrarotdiode (106) aus ist, und bei niedriger Spannung der seriellen Schnittstelle (102) die lichtemittierende infrarotdiode (106) eingeschaltet ist.

**20.** Vorrichtung nach Anspruch 1, wobei der Anzeigerahmen (10) in Form einer Platte eines Gepäckstückkarussells ist.

**21.** Vorrichtung nach Anspruch 1, wobei der Anzeigerahmen (10) als Teil einer Stufe einer Rolltreppe ausgebildet ist.

**Revendications**

**1.** Appareil d'affichage mobile comprenant :

a) au moins un émetteur de puissance (30) ;
b) au moins un émetteur de données (50) ; et
c) au moins un cadre d'affichage mobile (10) capable d'afficher une image, recevant de la puissance depuis ledit émetteur de puissance (30) et recevant des données depuis ledit émetteur de données (50) ;

**caractérisé en ce que**
ledit cadre d'affichage mobile (10) est déplaçable par rapport audit émetteur de puissance (30) et ledit émetteur de données (50) et en outre
ledit émetteur de données (50) et ledit émetteur de puissance (30) ne sont pas électriquement connectés audit cadre d'affichage mobile (10).

**2.** Appareil de la revendication 1, dans lequel ledit système d'affichage mobile comprend une pluralité de cadres d'affichage mobiles (10).

**3.** Appareil de la revendication 2, dans lequel ladite pluralité de cadres d'affichage mobiles (10) sont mutuellement connectés.

**4.** Appareil de la revendication 3, dans lequel lesdits cadres d'affichage mobiles (10) sont capables de mouvement par rapport audit émetteur de puissance (30) et audit émetteur de données (50) et où chacun desdits cadres d'affichage mobiles (10) est capable de mouvement les uns par rapport aux autres desdits cadres d'affichage mobiles (10).

**5.** Appareil de la revendication 2, dans lequel lesdits cadres d'affichage mobiles (10) sont reliés par un câble électrique (19) capable de transporter du courant électrique.

**6.** Appareil de la revendication 5, dans lequel lesdits câbles électriques (19) comprennent un conducteur C.C. (92) et un conducteur de terre (90).

**7.** Appareil de la revendication 2, dans lequel lesdits cadres d'affichage mobiles (10) sont reliés par un câble de données (18) capable de transporter des données.

**8.** Appareil de la revendication 7, dans lequel ledit câble de données (18) comprend un conducteur de données (110) et un conducteur de terre (112).

**9.** Appareil de la revendication 6, dans lequel la puissance reçue par un desdits cadres d'affichage mobiles (10) depuis ledit émetteur de puissance (30) est transmise aux autres desdits cadres d'affichage mobiles (10) par lesdits conducteurs électriques,

**10.** Appareil de la revendication 7, dans lequel les données reçues par un desdits cadres d'affichage mobiles (10) depuis ledit émetteur de données (50) sont transmises aux autres cadres d'affichage mobiles (10) par ledit câble de données (18).

**11.** Appareil de la revendication 2, dans lequel chacun desdits cadres d'affichage mobiles (10) comprend :

a) un panneau d'affichage (60) pour afficher des images ;
b) un récepteur de données (16) pour recevoir des données depuis ledit émetteur de données (50) ;
c) un contrôleur d'affichage (14) pour identifier les données destinées audit panneau d'affichage (60), traiter lesdites données et distribuer lesdites données audit panneau d'affichage (60) ;

et
d) un récepteur de puissance pour recevoir une puissance depuis ledit émetteur de puissance (30).

**12.** Appareil de la revendication 11 dans lequel ledit panneau d'affichage (60) comprend une pluralité de diodes électroluminescentes (106).

**13.** Appareil de la revendication 11, dans lequel ledit récepteur de données (16) comprend une diode électroluminescente infrarouge (106), où la résistance électrique de ladite diode électroluminescente (106) est diminuée en réponse à une lumière infrarouge émise par ledit émetteur (50),

**14.** Appareil de la revendication 11, dans lequel ledit contrôleur d'affichage (14) comprend un microcontrôleur.

**15.** Appareil de la revendication 11, dans lequel ledit récepteur de puissance comprend une pluralité de bobines de fil métallique, un redresseur C.A.-C.C. (11) et un convertisseur C.C.-C.C. (12), où un courant est induit dans ladite pluralité de bobines de fil métallique par un flux magnétique variable dans le temps généré par ledit émetteur de puissance (30).

**16.** Appareil de la revendication 1, dans lequel ledit émetteur de puissance (30) comprend un générateur de flux magnétique variable dans le temps.

**17.** Appareil de la revendication 16, dans lequel ledit générateur de flux magnétique variable dans le temps (30) comprend un inverseur de phase (32) connecté à une pluralité de bobines de fil métallique, où, lorsqu'un courant C.A, déphasé est appliqué à ladite pluralité de bobines de fil métallique, un flux magnétique variable dans le temps est généré.

**18.** Appareil de la revendication 1, dans lequel ledit émetteur de données (50) comprend un microcontrôleur comprenant au moins un port série (102), ledit port série (102) étant connecté à une diode électroluminescente infrarouge (106).

**19.** Appareil de la revendication 18, dans lequel, lorsqu'une tension dudit port série (102) est élevée, ladite diode électroluminescente infrarouge (106) est désactivée, et lorsqu'une tension dudit port série (102) est faible, ladite diode électroluminescente infrarouge (106) est activée.

**20.** Appareil de la revendication 1, dans lequel ledit cadre d'affichage (10) est sous la forme d'une plaque d'un carrousel à bagages.

**21.** Appareil de la revendication 1, dans lequel ledit cadre d'affichage (10) fait partie d'une marche d'un escalator.

*FIG. 1A*

EP 1 668 621 B1

*FIG. 1B*

DC Power Supply

3 Phase Inverter

32

40 C Phase    38 B Phase    36 A Phase

34

30

39 Air Gap between TVMVG and Frame

20
10
22 A Phase
24 B Phase
26 C Phase

*FIG. 2*

EP 1 668 621 B1

12

*FIG. 3*

EP 1 668 621 B1

EP 1 668 621 B1

82    82

S    N    84    S    86    N

84

S    86    84    N    80    31

N    84    S    86

82    86    82    82    82    86    S    Magnet pair pitch : 2W

S    84    N    86    S

82

N

39 Air Gap between TVMVG and Frame

20    10

22 A Phase
24 B Phase
26 .C Phase

W

72

*FIG. 4*

FIG. 5

EP 1 668 621 B1

*FIG. 6*

EP 1 668 621 B1

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5687499 A

- WO 0220390 A2